# FASCICULE DE BREVET EUROPEEN

(11) **EP 0 536 071 B1**
(45) Date de publication et mention de la délivrance du brevet: **29.05.1996**
(21) Numéro de dépôt: 92440111.0
(22) Date de dépôt: 02.10.1992
(51) Int. Cl.: A01D 78/10, B60B 33/02

(54) **Machine de fenaison, notamment une faneuse de végétaux, avec au moins deux positions de travail**
Heuwerbungsmaschine, insb. ein Zetter für Pflanzengut, mit zumindest zwei Arbeitsstellungen
Haymaking machine, especially a crop tedder, with at least two work positions

(30) Priorité: 04.10.1991 FR 9112396
(43) Date de publication de la demande: 07.04.1993
(73) Titulaire: KUHN S.A., F-67700 Saverne (FR)
(72) Inventeur: Aron, Jérôme, F-67330 Dossenheim sur Zinsel (FR)
(74) Mandataire: Andres, Jean-Claude

(56) Documents cités:
- EP-A- 0 439 067
- DE-A- 1 482 149
- DE-U- 8 807 385
- DE-U- 9 010 685
- FR-A- 2 379 244
- FR-A- 2 550 687
- FR-A- 2 631 208
- GB-A- 2 041 205
- GB-A- 2 065 438
- US-A- 3 910 019
- US-A- 4 246 677
- US-A- 4 280 246
- US-A- 4 641 491
- S. HILDEBRAND 'FEINMECHANISCHE BAUELEMENTE' , VEB VERLAG TECHNIK , BERLIN

## Description

La présente invention se rapporte à une machine de fenaison, notamment une faneuse de végétaux fauchés, comportant un bâti portant plusieurs rotors pouvant être entraînés en rotation autour d'axes porteurs sensiblement verticaux ou inclinés dans la direction d'avancement, chacun de ces axes porteurs étant relié à une roulette disposée sous le rotor correspondant et se déplaçant sur le sol durant le travail, lequel bâti possède une poutre sur laquelle est articulé au moyen d'un axe un dispositif d'accouplement pour l'accrochage à un tracteur, ledit bâti pouvant être déplacé autour de cet axe d'articulation en vue de la transposition d'une première position de travail dans laquelle les rotors se situent sur une ligne sensiblement perpendiculaire à la direction d'avancement dans au moins une deuxième position de travail dans laquelle les rotors se situent sur une ligne oblique par rapport à la direction d'avancement, la position des roulettes pouvant être modifiée de sorte qu'elles soient dirigées dans la direction d'avancement dans chacune desdites positions de travail.

La machine connue dans la demande de brevet FR-A-2 550 687 est destinée à effectuer un travail de fanage dans la première position et un travail d'andainage latéral dans la deuxième position. Dans chacune de ces positions, le bâti est bloqué par rapport au dispositif d'accouplement au moyen d'un bras de réglage et les roulettes sont bloquées sur les axes porteurs des rotors au moyen de broches. Pour passer d'une position de travail dans l'autre, il faut notamment libérer le bâti, le déplacer manuellement autour de son axe d'articulation et le bloquer dans la nouvelle position, ainsi que retirer les broches de fixation des roulettes, déplacer ces dernières autour des axes porteurs et les immobiliser dans la nouvelle position. Dans ce mode de réglage, l'opérateur doit accéder au bâti de la machine et aux roulettes lors de chaque transposition, ce qui nécessite une interruption du travail. Cela est fastidieux et entraîne d'importantes pertes de temps. Par ailleurs, dans chacune des positions de travail, le bâti de la machine et les roulettes porteuses sont bloqués par rapport à leurs axes. De ce fait, ils ne peuvent pas s'orienter correctement dans la direction d'avancement, notamment dans les virages.

Sur des faneuses connues, les axes porteurs de tous les rotors peuvent être tournés simultanément sur eux-mêmes afin de modifier l'orientation des roulettes porteuses lors de la transposition d'une position de travail dans l'autre. Dans la première de ces positions, les rotors projettent les végétaux vers l'arrière de sorte qu'ils retombent pratiquement sur la même bande de terrain. Par contre, dans la deuxième position, les rotors projettent les végétaux en biais par rapport à la direction d'avancement, vers le côté de la machine qui est le plus en avant. Sur ces machines, les axes porteurs des rotors comportent à leurs extrémités supérieures des leviers qui sont reliés entre eux au moyen de tringles. De cette manière il est possible d'orienter simultanément l'ensemble des roulettes sans avoir à y accéder directement. Cet agencement nécessite cependant que les axes porteurs soient pivotants par rapport au bâti. Il n'y a donc pas de liaison rigide entre ces pièces essentielles de la structure porteuse de la machine. Lesdits axes peuvent rapidement prendre trop de jeu dans leurs logements respectifs, ce qui entraîne des frais d'entretien et de remplacement élevés. En sus, dans le cas de machines avec des rotors latéraux repliables pour le transport, les tringles doivent comporter des articulations qui correspondent à celles du bâti. Ces articulations fragilisent tout le dispositif d'orientation des roulettes et peuvent lui faire perdre peu à peu toute précision.

La présente invention a pour but de remédier aux inconvénients précités des machines connues. A cet effet, la machine selon l'invention comporte un vérin hydraulique pour transposer le bâti avec les rotors autour de son axe d'articulation, ledit vérin hydraulique étant agencé de telle sorte que, dans la première position de travail, le bâti puisse pivoter autour de cet axe d'articulation et, dans la seconde position, le bâti soit maintenu dans la position oblique, chaque roulette est montée sur une colonne fixée sur un support qui est articulé au moyen d'un axe d'articulation sensiblement parallèle à l'axe porteur du rotor correspondant sur un bras qui est fixé sur l'axe porteur, ce bras portant un moyen de blocage agencé de manière à bloquer la roulette par rapport à l'axe d'articulation de son support dans la première position de travail et à la laisser libre par rapport audit axe d'articulation dans la seconde position de travail.

Dans cet agencement, la transposition de la machine d'une position de travail dans l'autre peut être effectuée sans qu'il soit nécessaire d'interrompre le travail. En effet, le vérin hydraulique peut être actionné à partir du tracteur pendant que celui-ci avance et les roulettes s'orientent automatiquement dans la direction d'avancement lorsqu'elles roulent sur le sol. Ceci facilite le travail de l'utilisateur et permet de réaliser un important gain de temps. Par ailleurs, dans ce mode d'exécution, les axes porteurs des rotors sont liés rigidement au bâti de la machine. On obtient ainsi une structure porteuse beaucoup plus résistante.

Les moyens de blocage des roulettes sont avantageusement constitués par des disques qui sont solidaires des supports des roulettes et dont chacun présente une encoche périphérique, et par des arrêts qui coopèrent avec lesdits disques, chacun de ces arrêts étant constitué par un galet qui est monté sur un levier articulé sur ledit bras et qui est appliqué contre le disque correspondant au moyen d'un ressort.

Dans la première position de travail, les arrêts se situent dans les encoches des disques des supports des roulettes et bloquent les ensembles qui sont constitués par ces disques, les supports et les roulettes correspondants, dans la direction d'avancement. Dans cette première position de travail, tout le bâti de la machine s'oriente dans la direction d'avancement en pivotant autour de l'axe d'articulation avec le dispositif d'accouplement.

Lors du passage dans la deuxième position de travail, les ensembles constitués par les disques, les supports et les roulettes correspondants se libèrent d'eux-mêmes de leurs arrêts par suite du frottement des roulettes sur le sol. Celles-ci peuvent alors s'orienter librement dans la direction de déplacement.

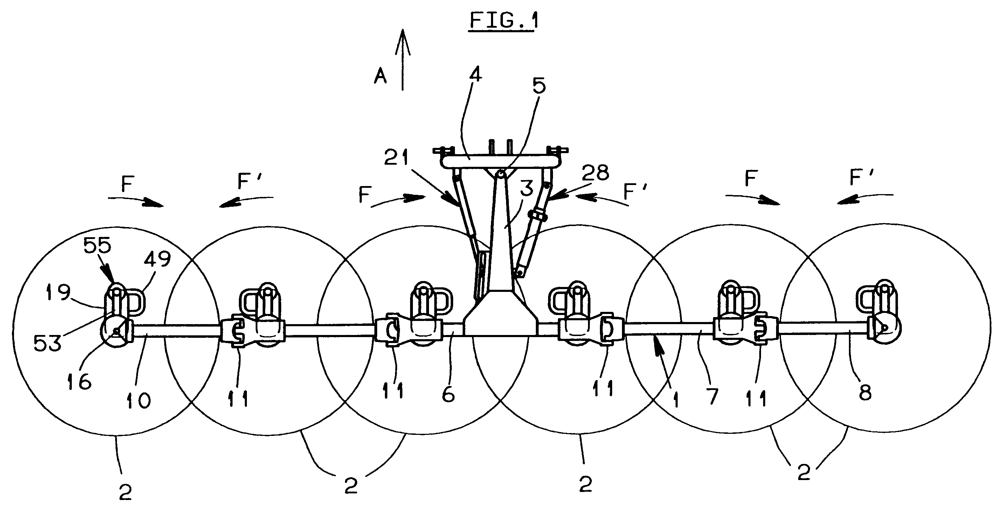

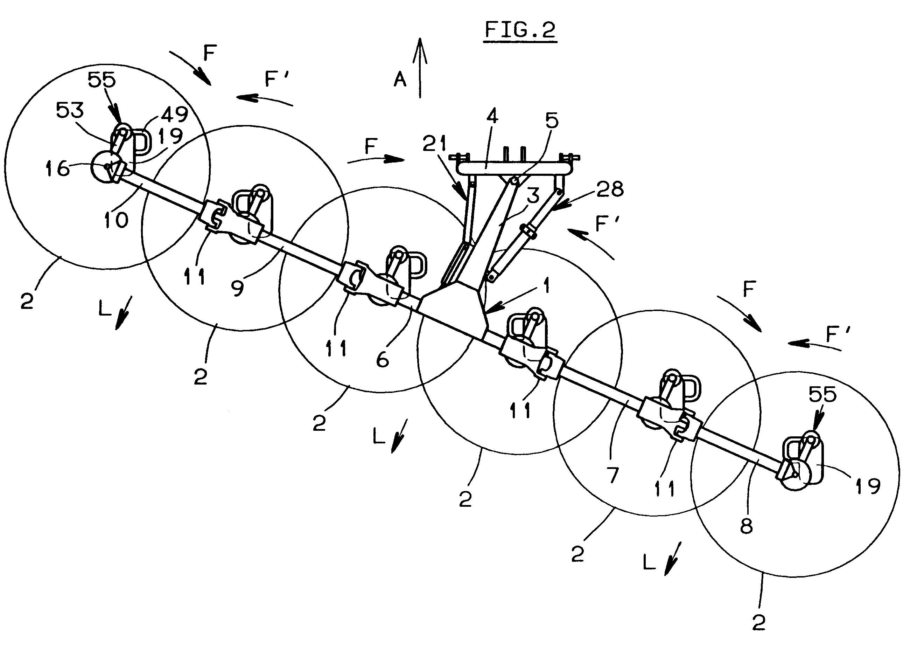

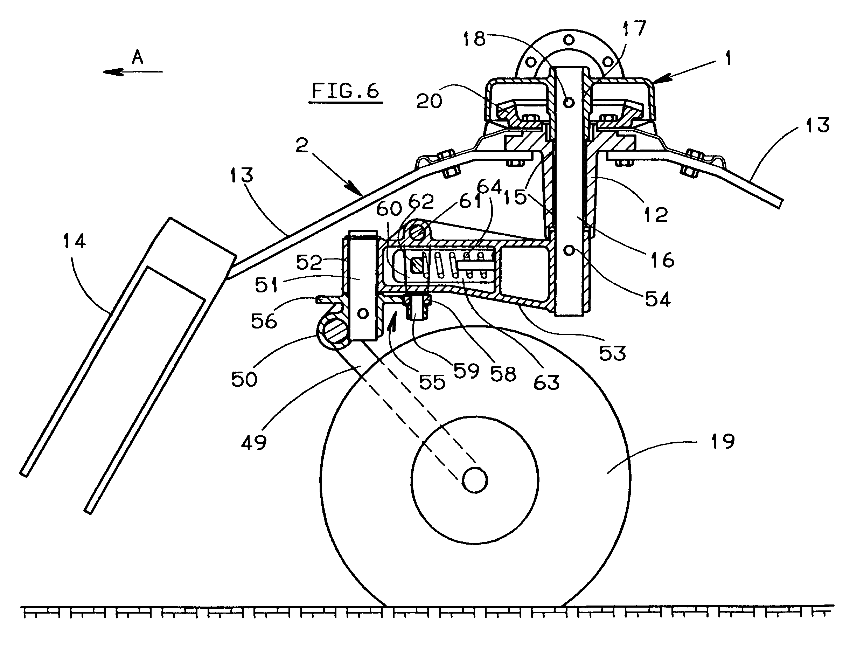

D'autres caractéristiques et avantages de l'invention ressortiront des revendications et de la description ci-après de plusieurs exemples de réalisation non limitatifs de l'invention, avec référence aux dessins annexés dans lesquels :
- La figure 1 représente une vue de dessus d'une machine selon l'invention dans une première position de travail.
- La figure 2 représente une vue de dessus de cette machine dans une deuxième position de travail.
- La figure 3 représente, à plus grande échelle, une vue de détail des moyens de commande servant à positionner la machine.
- La figure 4 représente une vue similaire à celle de la figure 3, d'un autre exemple de réalisation des moyens de commande.
- La figure 5 représente les moyens de commande selon l'exemple de la figure 4 dans la deuxième position de travail.
- La figure 6 représente une coupe d'un rotor suivant un plan vertical.
- La figure 7 représente une vue de détail, avec une coupe partielle, des moyens de blocage des roulettes dans la première position de travail.
- La figure 8 représente une vue similaire à celle de la figure 7, la roulette étant dans la deuxième position de travail.
Telle qu'elle est représentée sur les figures 1 et 2, la machine selon l'invention comporte un bâti (1) portant plusieurs rotors (2). Ledit bâti (1) peut être accouplé à un tracteur d'entraînement, non représenté, qui permet de déplacer la machine dans la direction (A). A cet effet, le bâti (1) possède une poutre (3) à l'extrémité de laquelle est articulé un dispositif d'accouplement (4).
L'articulation (5) entre la poutre (3) et ce dispositif est réalisée au moyen d'un axe sensiblement vertical. Le bâti (1) se compose par ailleurs d'un tronçon central (6) et de quatre tronçons latéraux (7 à 10) dont deux se situent d'un côté dudit tronçon central et deux de l'autre côté. Le tronçon central (6) est relié à la poutre (3). Il comporte deux rotors (2). Chaque tronçon latéral (7 à 10) porte un seul rotor (2). Ces différents tronçons (6 à 10) sont articulés entre eux au moyen d'articulations (11) comportant des axes qui sont sensiblement horizontaux et dirigés perpendiculairement auxdits tronçons. Les tronçons latéraux (7 à 10) sont repliables autour des articulations (11) en vue d'être transposés dans une position de transport dans laquelle la largeur de la machine est réduite.
Il ressort notamment de la figure 6, que chaque rotor (2) est constitué par un moyeu (12) sur lequel sont fixés plusieurs bras (13) portant des fourches de travail (14) à leurs extrémités libres. Ledit moyeu (12) est monté au moyen de roulements à aiguilles (15) sur un axe porteur (16). Dans la position de travail cet axe porteur est légèrement incliné vers l'avant. Il est logé avec son extrémité supérieure, dans un alésage (17) du bâti (1), et est fixé rigidement à ce dernier par une goupille (18). Une roulette (19) est reliée à l'extrémité inférieure de cet axe porteur (16). Cette roulette (19) est disposée sous le rotor (2) correspondant et se déplace sur le sol durant le travail. Le moyeu (12) porte également une couronne dentée (20) servant à l'entraîner en rotation autour de l'axe porteur (16). Cet entraînement est assuré à partir de l'arbre de prise de force du tracteur au moyen d'arbres de transmission qui sont logés dans les tronçons (6 à 10) du bâti (1) et d'un arbre intermédiaire qui s'étend sous la poutre (3). A cet effet, lesdits arbres de transmission comportent des pignons qui engrènent avec les couronnes (20) des différents rotors (2).

La machine représentée sur les figures 1 et 2 comporte un organe de commande (21) pour transposer son bâti (1) avec les rotors (2), autour de l'axe d'articulation (5), d'une des positions de travail dans l'autre. Dans l'exemple selon les figures 1 à 3 cet organe de commande (21) est constitué par un vérin hydraulique (22) qui est situé latéralement à la poutre (3). Il est articulé sur le dispositif d'accouplement (4) et sur la poutre (3) du bâti (1). L'articulation avec le dispositif d'accouplement (4) est assurée au moyen d'un axe (23) qui est fixé sur une patte (24) qui est soudée sur le dispositif d'accouplement (4) en un endroit situé près de son bord latéral. Ledit axe est sensiblement parallèle à l'axe d'articulation (5). L'autre extrémité du vérin hydraulique (22) comporte un axe (25). Celui-ci est guidé dans un orifice oblong (26) qui est prévu dans une patte latérale (27) solidaire de la poutre (3). Cet orifice (26) est sensiblement parallèle à ladite poutre (3).

Le vérin hydraulique (22) est relié au moyen de tuyaux non représentés au circuit hydraulique du tracteur et il peut être actionné à partir de ce dernier.

Entre le dispositif d'accouplement (4) et la poutre (3) est en sus prévu un dispositif de contrôle (28) du pivotement du bâti (1) autour de l'articulation (5). Ce dispositif se compose d'un fourreau (29) qui est relié au moyen d'un axe (30) à une patte (31) solidaire de la poutre (3) et, d'une lame (32) qui est reliée à une patte (33) solidaire du dispositif d'accouplement (4). Cette lame (32) est partiellement engagée dans ledit fourreau et peut s'y déplacer. La liaison entre la lame (32) et la patte (33) est assurée au moyen d'un axe (34). Sur le fourreau (29) est en sus prévue une bride (35) munie d'une rondelle de freinage (36) qui est appliquée sur la lame (32) à travers un trou de passage dans la paroi du fourreau (29). La pression avec laquelle cette rondelle (36) est appliquée sur la lame (32) peut être réglée en modifiant le serrage de la bride (35). Cette rondelle (36) est située dans une rainure (37) prévue à la face supérieure de la lame (32). Les extrémités (38 et 39) de cette rainure forment des butées qui limitent, en combinaison avec la rondelle (36), les déplacements entre la lame (32) et le fourreau (29) et par conséquent ceux du bâti (1) par rapport au dispositif d'accouplement (4).

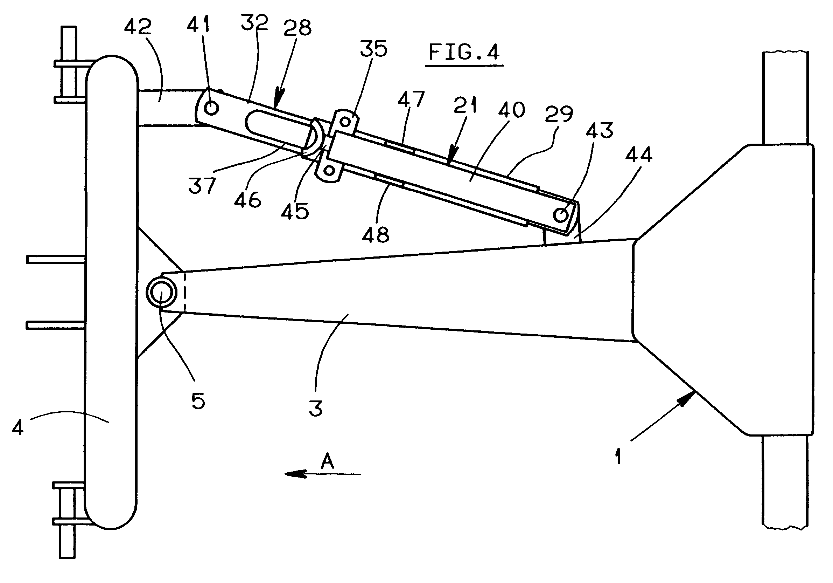

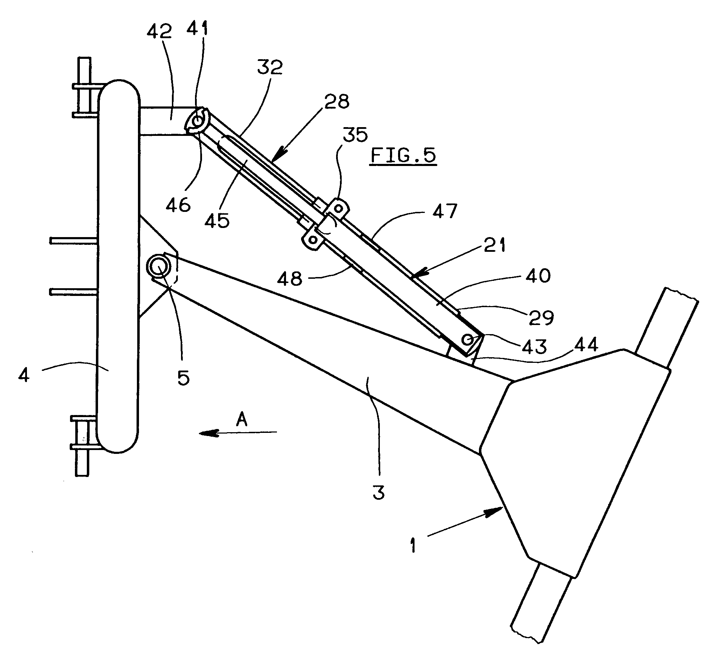

Dans l'exemple de réalisation selon les figures 4 et 5 l'organe de commande (21) est constitué par un vérin hydraulique (40) qui est articulé sur la poutre (3) et qui coopère avec un axe (41), formant une butée, solidaire du dispositif d'accouplement (4). Cet axe (41) est éloigné de l'articulation (5). Il est fixé sur une patte (42) qui est soudée sur le dispositif d'accouplement (4) en un endroit qui est situé près du bord latéral de ce dernier. L'articulation du vérin hydraulique (40) sur la poutre (3) est effectuée au moyen d'un axe (43) qui est fixé sur une patte (44) solidaire de ladite poutre. La tige (45) de ce vérin hydraulique (40) comporte à son extrémité une pièce coudée (46).

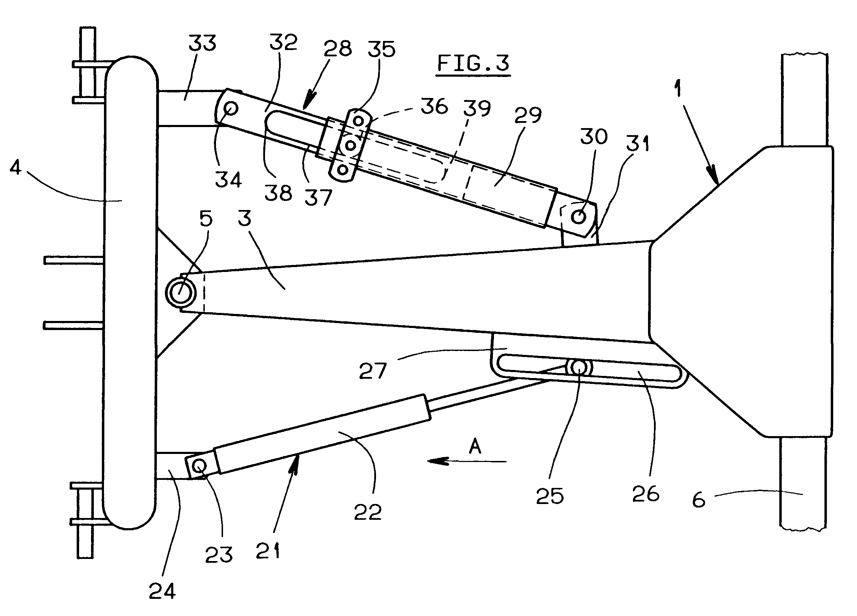

Ce vérin hydraulique (40) est placé au-dessus d'un dispositif de contrôle (28) qui est identique à celui décrit ci-dessus en liaison avec la figure 3. Ce dispositif de contrôle (28) est articulé sur les axes (41 et 43). Il comporte en sus deux pattes (47 et 48) sensiblement verticales, situées de part et d'autre du vérin hydraulique (40). Ces deux pattes (47 et 48) maintiennent le vérin hydraulique (40) de telle sorte qu'il soit constamment dirigé vers l'axe (41).

Comme cela ressort notamment de la figure 6, chaque roulette (19) est montée sur une colonne (49). Celle-ci est fixée sur un support (50) qui possède un axe d'articulation (51) sensiblement parallèle à l'axe porteur (16) du rotor (2) correspondant. Vu dans la direction d'avancement (A) cet axe d'articulation (51) se situe devant l'axe porteur (16). Il est logé de manière à pouvoir tourner sur lui-même dans un alésage (52) d'un bras (53) qui est fixé sur l'axe porteur (16). Cette fixation est réalisée au moyen d'une goupille (54). Ledit bras (53) s'étend pratiquement perpendiculairement à l'axe porteur (16) et est dirigé vers l'avant, vu dans la direction d'avancement (A).

Sous les rotors (2) sont disposés des moyens (55) qui bloquent les roulettes (19) par rapport aux axes porteurs (16) correspondants dans la première position de travail et qui les libèrent automatiquement lorsque la machine est transposée dans la seconde position de travail. Les moyens (55) sont constitués par un disque circulaire (56) qui présente une encoche périphérique (57) et qui est solidaire du support (50), et par un arrêt (58) qui coopère avec ledit disque (voir figures 6 à 8). Ce disque (56) est concentrique à l'axe d'articulation (51) et se situe sous le bras (53). Son encoche (57) est placée sur un plan médian (M), sensiblement vertical, de la roulette (19) correspondante. L'arrêt (58) est constitué par un galet. Il est monté sur un axe (59) sensiblement vertical qui est solidaire d'un levier coudé (60). Celui-ci est articulé sur un axe (61) sensiblement horizontal qui est prévu à la partie supérieure du bras (53). Entre l'axe d'articulation (61) et le galet (58) le levier (60) comporte un doigt (62) qui est dirigé parallèlement audit axe (61). Ce doigt (62) s'étend dans une ouverture (63) prévue dans le bras (53). Dans cette ouverture (63) est logé un ressort de pression (64). L'une des extrémités de ce ressort (64) s'appuie contre le bras (53) tandis que son autre extrémité s'appuie contre le doigt (62) du levier (60). Il pousse ainsi ce dernier en direction du disque (56). De ce fait, le galet (58), qui est également solidaire du levier (60) est constamment appliqué contre ledit disque (56).

Durant le travail, la machine est accouplée à un tracteur qui permet de la déplacer dans la direction (A). Les rotors (2) sont entraînés en rotation, autour de leurs axes porteurs (16) respectifs, de telle sorte qu'ils tournent deux à deux en convergence à l'avant (flèches F et F'). Leurs fourches (14) ramassent alors les végétaux qui se trouvent au sol, les déplacent vers l'arrière et les étalent à nouveau tout en provoquant leur retournement. Les différents rotors (2) peuvent suivre les dénivellations du sol en pivotant avec leurs tronçons (6 à 10) autour des articulations (11) de ces derniers.

Dans la première position de travail qui est représentée sur la figure 1, le bâti (1) et les rotors (2) se situent sur une ligne sensiblement perpendiculaire au sens d'avancement (A). Les rotors (2) projettent alors les végétaux dans la direction opposée au sens d'avancement (A) de telle sorte qu'ils retombent pratiquement sur la même bande de terrain. Dans cette position l'axe (25) du vérin hydraulique (22) se situe sensiblement au milieu de l'orifice oblong (26) (position représentée sur la figure 3). Ceci permet au bâti (1) de pivoter autour de l'articulation (5) vers la droite et vers la gauche afin de bien suivre le tracteur dans les courbes et les virages. Durant ces pivotements la lame (32) se déplace dans le fourreau (29). La rondelle (36) freine cependant ces pivotements de sorte qu'ils ne soient pas brusques.

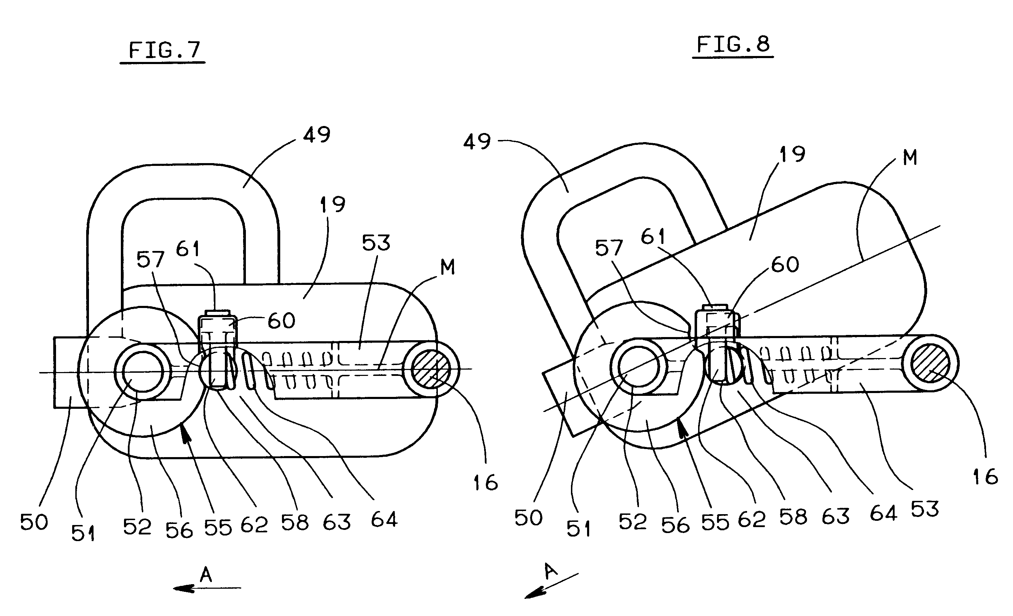

Dans cette position de travail les roulettes (19) sont bloquées dans une direction sensiblement perpendiculaire aux tronçons (6 à 10) du bâti (1). Comme cela ressort des figures 6 et 7, les galets (58) des leviers (60) sont poussés dans les encoches (57) par les ressorts (64). Ils empêchent ainsi les ensembles constitués par les roulettes (19), leurs colonnes (49) et leurs supports (50) de tourner avec les axes (51) dans les alésages (52) des bras (53). Les roulettes (19) guident alors la machine et la maintiennent pratiquement dans l'alignement du tracteur.

Selon l'invention, la machine peut être transposée dans la deuxième position de travail qui est représentée sur la figure 2 à partir du tracteur et sans qu'il soit nécessaire d'interrompre le travail. Pour effectuer cette transposition le dispositif hydraulique du tracteur est actionné de telle sorte qu'il provoque un raccourcissement du vérin hydraulique (22). Ce dernier tire alors sur la poutre (3) de telle sorte que tout le bâti (1) pivote sur le côté autour de l'articulation (5), dans la position représentée sur la figure 2. Durant ce pivotement la lame (32) sort du fourreau (29) jusqu'à ce que la rondelle (36) arrive dans l'extrémité (39) de la rainure (37). Dans cette nouvelle position le bâti (1) est immobile par rapport au dispositif d'accouplement (4). Les rotors (2) se situent alors sur une ligne oblique par rapport à la direction d'avancement (A). Ils déplacent ainsi les végétaux en biais, dans le sens des flèches (L).

Durant ledit pivotement du bâti (1), les roulettes (19) sont retenues par le sol et demeurent orientées dans la direction d'avancement. La forte pression latérale exercée par les bras (53) fait sortir les galets (58) des encoches (57). Les leviers (60) pivotent alors en arrière et compriment les ressorts (64) (voir figure 8). Chaque galet (58) se situe alors sur une partie de la périphérie du disque (56) qui est concentrique à l'axe d'articulation (51). Dans cette position les roulettes (19) ne sont plus bloquées. De ce fait elles peuvent s'orienter dans la direction d'avancement donnée par le tracteur.

Pour revenir dans la première position de travail il suffit de provoquer un allongement du vérin hydraulique (22). Il libère ainsi le bâti (1) qui pivote automatiquement autour de l'articulation (5) et s'aligne sur le tracteur. Simultanément les bras (53) qui sont situés sous les rotors (2) reviennent dans leur position initiale dans laquelle les galets (58) pénètrent dans les encoches (57) en raison de la pression des ressorts (64). Ils immobilisent ainsi à nouveau les roulettes (19) dans la position où elles sont sensiblement perpendiculaires aux tronçons (6 à 10).

Il est également possible de transposer la machine dans une troisième position de travail. Pour cela il faut actionner le vérin hydraulique (22) de telle sorte qu'il s'allonge et pousse le bâti (1) sur le côté opposé à celui qui est représenté sur la figure 2. Dans ce cas le vérin hydraulique (22) doit être à double effet. Dans cette troisième position les galets (58) ont également quitté les encoches (57) de sorte que les roulettes (19) soient libres et puissent s'orienter dans la direction de déplacement.

L'exemple de réalisation des moyens de commande (21) selon les figures 4 et 5 permet également de transposer le bâti (1) de la machine d'une première position de travail dans une deuxième position de travail sans qu'il soit nécessaire d'interrompre le travail. Dans la première position, le vérin hydraulique (40) est rétracté (voir figure 4). Le bâti (1) occupe alors la positon représentée sur la figure 1. Il peut pivoter autour de l'articulation (5) pour suivre le tracteur. Ces pivotements sont contrôlés au moyen de la lame (32) qui se déplace dans le fourreau (29) et sur laquelle est poussée la rondelle (36) de la bride (35). Le fourreau (29) guide en sus le vérin hydraulique (40) afin qu'il soit constamment orienté vers l'axe (41) prévu sur le dispositif d'accouplement (4). Par ailleurs, les roulettes (19) sont immobilisées dans la position où elles sont sensiblement perpendiculaires aux tronçons (6 à 10).

Pour transposer la machine dans la deuxième position de travail (figure 2) le vérin hydraulique (40) est actionné de telle sorte qu'il s'allonge. Dès qu'il rencontre l'axe (41) il pousse sur le bâti afin qu'il se déplace autour de l'articulation (5). Cette position est représentée sur la figure 5. Simultanément les galets (58) sortent des encoches (57) des disques (56) et libèrent les roulettes (19) (position représentée sur la figure 8 et décrite précédemment). Le bâti (1) est alors bloqué dans la position oblique, les roulettes (19) étant libres et pouvant s'orienter dans la direction de déplacement.

Pour revenir dans la première position de travail, il suffit d'actionner le vérin hydraulique (40) pour qu'il se rétracte. Cela a pour effet de libérer le bâti (1) de sorte qu'il puisse se replacer dans l'alignement du tracteur. De même, les galets (58) reviennent dans les encoches (57) et immobilisent à nouveau les roulettes (19) dans la position où elles sont sensiblement perpendiculaires aux tronçons (6 à 10).

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans sortir pour autant du domaine de protection tel que défini dans les revendications.

## Revendications

1. Machine de fenaison, notamment une faneuse de végétaux fauchés, comportant un bâti (1) portant plusieurs rotors (2) pouvant être entraînés en rotation autour d'axes porteurs (16) sensiblement verticaux ou inclinés dans la direction d'avancement (A), chacun de ces axes porteurs (16) étant relié à une roulette (19) disposée sous le rotor (2) correspondant et se déplaçant sur le sol durant le travail, lequel bâti (1) possède une poutre (3) sur laquelle est articulé, au moyen d'un axe (5), un dispositif d'accouplement (4) pour l'accrochage à un tracteur, ledit bâti (1) pouvant être déplacé autour de cet axe d'articulation (5) en vue de la transposition d'une première position de travail dans laquelle les rotors se situent sur une ligue sensiblement perpendiculaire à la direction d'avancement (A) dans au moins une deuxième position de travail dans laquelle les rotors (2) se situent sur une ligue oblique par rapport à la direction d'avancement (A), la position des roulettes (19) pouvant être modifiée de sorte qu'elles soient dirigées dans la direction d'avancement (A) dans chacune desdites positions de travail, caractérisée par le fait qu'elle comporte un vérin hydraulique (22, 40) pour transposer le bâti (1) avec les rotors (2) autour de son axe d'articulation (5), ledit vérin hydraulique (22, 40) étant agencé de telle sorte que dans la première position de travail, le bâti (1) puisse pivoter autour de cet axe d'articulation (5) et dans la seconde position, le bâti (1) soit maintenu dans la position oblique, que chaque roulette (19) est montée sur une colonne (49) fixée sur un support (50) qui est articulé au moyen d'un axe d'articulation (51) sensiblement parallèle à l'axe porteur (16) du rotor (2) correspondant sur un bras (53) qui est fixé sur l'axe porteur (16) et que ce bras (53) porte un moyen de blocage (55) agencé de manière à bloquer la roulette (19) par rapport à l'axe d'articulation (51) de son support (50) dans la première position de travail et à la laisser libre par rapport audit axe d'articulation (51) dans la seconde position de travail.

2. Machine selon la revendication 1, caractérisée par le fait que le vérin hydraulique (22) est disposé entre le dispositif d'accouplement (4) et la poutre (3) du bâti (1), l'une de ses extrémités étant guidée dans un orifice oblong (26) d'une patte (27) solidaire de la poutre (3) du bâti (1).

3. Machine selon la revendication 1 ou 2, caractérisée par le fait que le vérin hydraulique (22) se situe latéralement à la poutre (3) du bâti (1) et que son point de contact (axe 23) avec le dispositif d'accouplement (4) se situe près du bord latéral de celui-ci.

4. Machine selon la revendication 1, caractérisée par le fait que le vérin hydraulique (40) se situe latéralement à la poutre (3), qu'il est articulé sur la poutre (3) au moyen d'un axe (43) et que le dispositif d'accouplement comporte un axe (41) formant une butée pour ledit vérin hydraulique (40).

5. Machine selon l'une quelconque des revendications précédentes, caractérisée par le fait que le vérin hydraulique (22, 40) est à double effet.

6. Machine selon l'une quelconque des revendications précédentes, caractérisée par le fait que le vérin hydraulique (22, 40) est associé à un dispositif de contrôle (28) du pivotement du bâti (1) autour de l'articulation (5) avec le dispositif d'accouplement (4), ce dispositif de contrôle étant articulé sur la poutre (3) et ledit dispositif d'accouplement.

7. Machine selon l'une quelconque des revendications précédentes, caractérisée par le fait que les moyens de blocage (55) des roulettes (19) sont constitués par des disques (56) qui sont solidaires des supports (50) et dont chacun présente une encoche périphérique (57), et par des arrêts (58) qui coopèrent avec lesdits disques (56).

8. Machine selon la revendication 7, caractérisée par le fait que la périphérie de chaque disque (56) est sensiblement concentrique à l'axe d'articulation (51) du support (50) de la roulette (19) correspondante.

9. Machine selon la revendication 7, caractérisée par le fait que l'encoche (57) de chaque disque (56) se situe, vu de dessus, sur un plan médian (M) de la roulette (19) correspondante.

10. Machine selon la revendication 7, caractérisée par le fait que chaque arrêt (58) est constitué par un galet qui est monté sur un levier (60) qui est articulé sur le bras (53).

11. Machine selon la revendication 10, caractérisée par le fait qu'un ressort (64) est disposé entre chaque bras (53) et son levier (60) pour appliquer le galet (58) contre le disque (56) correspondant.

12. Machine selon l'une quelconque des revendications précédentes, caractérisée par le fait que l'axe d'articulation (51) du support (50) de chaque roulette (19) se situe, vu dans la direction d'avancement (A), plus en avant que l'axe porteur (16) du même rotor (2).

## Claims

1. Haymaking machine, especially a tedder for cut plants, comprising a frame (1) carrying several rotors (2) which can be driven in rotation about carrier axes (16) approximately vertical or tilted in the direction of advance (A), each of these carrier axes (16) being connected to a wheel (19) located under the corresponding rotor (2) and displacing on the soil during work, the said flame (1) having a beam (3) on which is articulated, by means of an axis (5), a coupling device (41) for its hitching to a tractor vehicle, the said frame (1) being displaceable about this axis of articulation (5) in order to be brought from a first work position in which the rotors are located on a line approximately perpendicular to the direction of advance (A) in at least a second work position in which the rotors (2) are located on a line directed obliquely to the direction of advance (A), the position of the wheels (19) being modifiable so that they are directed in the direction of advance (A) in each of the said work positions, ***characterised in*** that it comprises a hydraulic jack (22, 40) to transpose the frame (1) with the rotors (2) about its axis of articulation (5), the said hydraulic jack (22, 40) being arranged so that in the first work position, the frame (1) can pivot about this axis of articulation (5) and in the second position, the frame (1) is maintained in the oblique position, that each wheel (19) is mounted on a column (49) fastened to a holder (50) which is articulated by means of an axis of articulation (51) approximately parallel to the carrier axis (16) of the corresponding rotor (2) on an arm (53) which is fastened to the carrier axis (16) and that this arm (53) comprises a locking mean (55) arranged so that it locks the wheel (19) with regard to the axis of articulation (51) of its holder (50) in the first work position and leaves it free with regard to the said axis of articulation (51) in the second work position.

2. Machine in accordance with claim 1, ***characterised in*** that the hydraulic jack (22) is located between the coupling device (4) and the beam (3) of the frame (1), one of its ends being guided in an oblong opening (26) of a holdfast (27) firmly attached to the beam (3) of the flame (1).

3. Machine in accordance with claim 1 or 2, ***characterised in*** that the hydraulic jack (22) is located laterally to the beam (3) of the flame (1) and that its point of contact (axis 23) with the coupling device (4) is located in the vicinity of the lateral border of the latter.

4. Machine in accordance with claim 1, ***characterised in*** that the hydraulic jack (40) is located laterally to the beam (3), that it is articulated on the beam (3) by means of an axis (43) and that the coupling device comprises an axis (41) constituting a stop for the said hydraulic jack (40).

5. Machine in accordance with anyone of the preceding claims, ***characterised in*** that the hydraulic jack (22, 40) is a double-acting jack.

6. Machine in accordance with anyone of the preceding claims, ***characterised in*** that the hydraulic jack (22, 40) is combined with a device (28) for the control of the rotation of the frame (1) about the articulation (5) with the coupling device (4), this control device being articulated on the beam (3) and the said coupling device.

7. Machine in accordance with anyone of the preceding claims, ***characterised in*** that the locking means (55) of the wheels (19) are constituted by discs (56) firmly attached to the holders (50) and each provided with a peripheric slot (57) and by stops (58) which cooperate with the said discs (56).

8. Machine in accordance with claim 7, ***characterised in*** that the periphery of each disc (56) is approximately concentric to the axis of articulation (51) of the holder (50) of the corresponding wheel (19).

9. Machine in accordance with claim 7, ***characterised in*** that the slot (57) of each disc (56) is, seen from above, located in a median plane (M) of the corresponding wheel (19).

10. Machine in accordance with claim 7, ***characterised in*** that each stop (58) is constituted by a roller which is mounted on a lever (60) articulated on the arm (53).

11. Machine in accordance with claim 10, ***characterised in*** that a spring (64) is arranged between each arm (53) and its lever (60) to apply the roller (58) to the corresponding disc (56).

12. Machine in accordance with anyone of the preceding claims, ***characterised in*** that the axis of articulation (51) of the holder (50) of each wheel (19) is located, seen in the direction of advance (A), more forward than the carrier axis (16) of the same rotor (2).

## Patentansprüche

1. Heuwerbungsmaschine, insbesondere ein Zetter für Mähgut, mit einem Rahmen (1), der mehrere Rotoren (2) trägt, die um im wesentlichen vertikale oder in Fahrtrichtung (A) geneigte Tragachsen (16) rotierend angetrieben werden können, wobei jede dieser Tragachsen (16) mit einem unter dem entsprechenden Rotor (2) angeordnetem Rad (19) verbunden ist, welches sich bei Betrieb auf dem Boden bewegt, und wobei der Rahmen (1) einen Träger (3) aufweist, an dem mittels einer Achse (5) eine Kupplungsvorrichtung (4) zum Anhängen an eine Zugmaschine angelenkt ist, wobei der Rahmen (1) im Hinblick auf das Umstellen von einer ersten Arbeitsstellung, in der sich die Rotoren auf einer im wesentlichen senkrecht zur Fahrtrichtung (A) verlaufenden Linie befinden, in mindestens eine zweite Arbeitsstellung, in der sich die Rotoren (2) auf einer bezüglich der Fahrtrichtung (A) schräg verlaufenden Linie befinden, um diese Drehachse (5) verschoben werden kann, und wobei die Stellung der Räder (19) so geändert werden kann, daß sie in jeder der Arbeitsstellungen in Fahrtrichtung (A) ausgerichtet sind, ***dadurch gekennzeichnet*****,** daß sie einen Hydraulikzylinder (22, 40) zur Verschiebung des Rahmens (1) mit den Rotoren (2) um seine Drehachse (5) aufweist, wobei der Hydraulikzylinder (22, 40) so angeordnet ist, daß der Rahmen (1) in der ersten Arbeitsstellung um diese Drehachse (5) schwenken kann und in der zweiten Arbeitsstellung in der schrägen Stellung gehalten wird, daß jedes Rad (19) an einem an einer Stütze (50) befestigten Schaft (49) angebracht ist, wobei diese Stütze mittels einer im wesentlichen parallel zur Tragachse (16) des entsprechenden Rotors (2) verlaufenden Drehachse (51) an einem Arm (53) angelenkt ist, der an der Tragachse (16) befestigt ist, und daß dieser Arm (53) ein Verriegelungsmittel (55) trägt, das so angeordnet ist, daß es das Rad (19) bezüglich der Drehachse (51) ihrer Stütze (50) in der ersten Arbeitsstellung verriegelt und sie in der zweiten Arbeitsstellung bezüglich der Drehachse (51) freigibt.

2. Maschine nach Anspruch 1, ***dadurch gekennzeichnet*****,** daß der Hydraulikzylinder (22) zwischen der Kupplungsvorrichtung (4) und dem Träger (3) des Rahmens (1) angeordnet ist, wobei eines seiner Enden in einem Langloch (26) einer fest mit dem Träger (3) des Rahmens (1) verbundenen Halterung (27) geführt wird.

3. Maschine nach Anspruch 1 oder 2, ***dadurch gekennzeichnet*****,** daß sich der Hydraulikzylinder (22) seitlich des Trägers (3) des Rahmens (1) befindet und daß sich sein Berührungspunkt (Achse 23) mit der Kupplungsvorrichtung (4) nahe deren Seitenrand befindet.

4. Maschine nach Anspruch 1, ***dadurch gekennzeichnet*****,** daß sich der Hydraulikzylinder (40) seitlich des Trägers (3) befindet, daß er mittels einer Achse (43) an dem Träger (3) angelenkt ist und daß die Kupplungsvorrichtung eine einen Anschlag für den Hydraulikzylinder (40) bildende Achse (41) aufweist.

5. Maschine nach einem der vorhergehenden Ansprüche, ***dadurch gekennzeichnet*****,** daß es sich bei dem Hydraulikzylinder (22, 40) um einen doppeltwirkenden Zylinder handelt.

6. Maschine nach einem der vorhergehenden Ansprüche, ***dadurch gekennzeichnet*****,** daß der Hydraulikzylinder (22, 40) einer Kontrollvorrichtung (28) für das Schwenken des Rahmens (1) um das Gelenk (5) mit der Kupplungsvorrichtung (4) zugeordnet ist, wobei diese Kontrollvorrichtung an dem Träger (3) und der Kupplungsvorrichtung angelenkt ist.

7. Maschine nach einem der vorhergehenden Ansprüche, ***dadurch gekennzeichnet*****,** daß die Verriegelungsmittel (55) der Räder (19) aus Scheiben (56), die mit den Stützen (50) fest verbunden sind und jeweils eine Umfangskerbe (57) aufweisen, und aus mit den Scheiben (56) zusammenwirkenden Sperrvorrichtungen (58) bestehen.

8. Maschine nach Anspruch 7, ***dadurch gekennzeichnet*****,** daß der Umfang jeder Scheibe (56) im wesentlichen konzentrisch zur Drehachse (51) der Stütze (50) des entsprechenden Rades (19) ist.

9. Maschine nach Anspruch 7, ***dadurch gekennzeichnet*****,** daß sich die Kerbe (57) jeder Scheibe (56) in Draufsicht auf einer Mittelebene (M) des entsprechenden Rades (19) befindet.

10. Maschine nach Anspruch 7, ***dadurch gekennzeichnet*****,** daß jede Sperrvorrichtung (58) aus einer Rolle besteht, die an einem Hebel (60) angebracht ist, welcher an dem Arm (53) angelenkt ist.

11. Maschine nach Anspruch 10, ***dadurch gekennzeichnet*****,** daß eine Feder (64) zwischen jedem Arm (53) und seinem Hebel (60) angebracht ist, um die Rolle (58) an die entsprechende Scheibe (56) zu drücken.

12. Maschine nach einem der vorhergehenden Ansprüche, ***dadurch gekennzeichnet*****,** daß sich die Drehachse (51) der Stütze (50) jedes Rades (19) in Fahrtrichtung (A) betrachtet weiter vorne befindet als die Tragachse (16) des gleichen Rotors (2).
